# EUROPÄISCHE PATENTANMELDUNG

(11) **EP 1 930 605 A1**
(43) Veröffentlichungstag der Anmeldung: **11.06.2008**
(21) Anmeldenummer: 06125526.1
(22) Anmeldetag: 06.12.2006
(51) Int. Cl.: F16B 1/00, F16L 13/00

(54) **Fitting für ein Rohr, insbesondere ein Kunststoffrohr oder ein Kunststoff-/Metallverbundrohr**

(71) Anmelder: Uponor Innovation AB, 513 81 Fristad (SE)
(72) Erfinder: Dittmar, Rainer, 97532, Üchtelhausen (DE)
(74) Vertreter: Hilleringmann, Jochen

(57) **Zusammenfassung**

Der Fitting für ein Rohr, insbesondere ein Kunststoffrohr oder ein Kunststoff-/Metallverbundrohr, ist versehen mit einem Fittingkörper (12) zur Aufnahme des Endes (24) eines anzuschließenden Rohres (26) und einem Fixierelement (32) zum Fixieren des Endes (24) des anzuschließenden Rohres (26) an dem Fittingkörper (12), wobei das Fixierelement (32) eine Formgedächtnis-Metalllegierung aufweist und das Fixierelement (32) durch thermische Aktivierung aus einem Nicht-Fixierzustand, in dem das Ende (24) des anzuschließenden Rohres (26) ohne Fixierung von dem Fittingkörper (12) aufgenommen ist, in einen Fixierzustand verformbar ist, in dem das Ende (24) des anzuschlie-ßenden Rohres (26) an dem Fittingkörper (12) fixiert ist.

## Beschreibung

Die Erfindung betrifft einen Fitting für ein Rohr, bei dem es sich insbesondere um ein Kunststoffrohr oder ein Kunststoff-/Metallverbundrohr handelt.

Fittinge für Kunststoffrohre oder Kunststoff-/Metallverbundrohre sind grundsätzlich bekannt. Diese Fittinge weisen im Regelfall einen Fittingkörper auf, der mit einer Stützhülse versehen ist, auf die das Ende eines anzuschließenden Rohres aufschiebbar ist. Die bekannten Fittingkörper sind darüber hinaus mit Klemmelementen versehen, die zum Fixieren des Endes des anzuschließenden Rohres an der Stützhülse vorgesehen sind. Beispiele für derartige Fittinge, die mitunter auch Klemmfittinge genannt werden, finden sich in DE-A-199 34 093, DE-U-93 15 601, DE-U-203 13 506, WO-A-2006/097409 und US-A-3 830 531.

Bei den bekannten Klemmfittingen wird die von dem Klemmelement auf das anzuschließende Rohr aufzubringende Klemmkraft durch radial einwärts gerichtetes Stauchen bzw. Verengen eines Klemmrings erzeugt. Hierzu wird eine den Klemmring umgebende Überwurfmutter angezogen, was einen zusätzlichen Arbeitsgang bedeutet.

Aus EP 0 682 758 B1 ist es bekannt, dass das auf die Stützhülse eines Fittingkörpers geschobene Ende eines anzuschließenden Rohres mit Hilfe einer voraufgeweiteten Kunststoffhülse gegen die Stützhülse zu pressen bzw. zu klemmen. Auch die Montage eines derartigen Fittings ist relativ zeitaufwendig.

Aufgabe der Erfindung ist es, einen Fitting für ein Rohr, insbesondere ein Kunststoffrohr oder ein Kunststoff-/Metallverbundrohr zu schaffen, bei dem sich ein an das anzuschließende Rohr festklemmendes Fixierelement auf einfache Art und Weise aktivieren lässt.

Zur Lösung dieser Aufgabe wird mit der Erfindung ein Fitting für ein Rohr, insbesondere ein Kunststoffrohr oder ein Kunststoff-/Metallverbundrohr vorgeschlagen, wobei der Fitting versehen ist mit
- einem Fittingkörper zur Aufnahme des Endes eines anzuschließenden Rohres und
- einem Fixierelement zum Fixieren des Endes des anzuschließenden Rohres an dem Fittingkörper.

Bei diesem Fitting ist erfindungsgemäß vorgesehen, dass
- das Fixierelement eine Formgedächtnis-Metalllegierung aufweist und
- das Fixierelement durch thermische Aktivierung aus einem Nicht-Fixierzustand, in dem das Ende des anzuschließenden Rohres ohne Fixierung von dem Fittingkörper aufgenommen ist, in einen Fixierzustand verformbar ist, in dem das Ende des anzuschließenden Rohres an dem Fittingkörper fixiert ist.

Erfindungsgemäß weist das Fixierelement eine Metalllegierung und zwar eine Formgedächtnis-Metalllegierung auf. Derartige Legierungen lassen sich durch thermische Beeinflussung wahlweise in den Martensit-Gefügezustand (Weichphase) und den Austenit-Gefügezustand (Hartphase) überführen. Das Fixierelement aus diesem Material wird zunächst (insbesondere kalt und unterhalb seiner Martensit-Starttemperatur) verformt und in eine Nicht-Fixierposition überführt, in der das Ende des anzuschließenden Rohres ohne Fixierung auf die Stützhülse aufgeschoben werden kann. Wird nun das Fixierelement thermisch aktiviert, d.h. über seine Austenit-Starttemperatur erwärmt, so wird es in seine Fixierposition überführt, in der das Ende des anzuschließenden Rohres an der Stützhülse fixiert ist. In seinem Zustand vor der Kaltverformung weist das Fixierelement eine Formgebung auf, die im wesentlichen gleich der Formgebung des Fixierelements in dessen Fixierposition ist.

Erfindungsgemäß wird für das Fixierelement eine Formgedächtnislegierung verwendet. Derartige Metalllegierungen sind bekannt und werden z.B. von der Dr-Ing, Mertmann Memory-Metalle GmbH, 79098 Freiburg i. Br., Bundesrepublik Deutschland, vertrieben. Die Martensit- und Austenit-Starttemperaturen können durch die Wahl der Legierungszusammensetzung eingestellt werden. Im Falle eines Fittings sollte die Austenit-Starttemperatur, also diejenige Temperatur, bei der sich das Fixierelement zurückverformt, oberhalb etwa 60° und zwischen 60° und 100° liegen, um eine versehentliche thermische Aktivierung des Fixierelements zu verhindern.

Das erfindungsgemäße Fixierelement aus einer Formgedächtnis-Metalllegierung kann verwendet werden, ohne dass es in seiner Fixierposition das Ende des anzuschließenden Rohres verformt. Beispielsweise könnte sich das Fixierelement an die Außen- oder Innenseite des anzuschließenden Rohres anlegen bzw. sich dort verkrallen, um ein unbeabsichtigtes Ablösen des Rohres vom Fitting zu verhindern. Derartige Verriegelungsmechanismen sind von Steckfittingen her bekannt. Es ist aber auch möglich, dass die von dem Fixierelement in dessen Fixierzustand auf das Ende des anzuschließenden Rohres aufgebrachte Kraft zur Verformung des Rohrendes führt, was wiederum zur Fixierung des Rohrendes am Fittingkörper genutzt werden kann. Bei dieser Variante der Erfindung weist der Fittingkörper eine Stützhülse auf, auf die das Ende des anzuschließenden Rohres aufschiebbar ist. Die Stützhülse kann nun an ihrer Außenseite eine Vertiefung aufweisen, in die das Fixierelement, das die Vertiefung überspannt, das anzuschließende Rohrende unter Verformung desselben hineindrückt. Ebenso ist es möglich, dass die Stützhülse an ihrer Außenseite einen Vorsprung aufweist, wobei das Fixierelement in seinem Fixierzustand einen den Vorsprung überspannenden Bereich des Endes des anzuschließenden Rohres zumindest auf der einem freien Ende der Stützhülse abgewandten Seite des Vorsprunges, über dass das Ende des anzuschließenden Rohres auf die Stützhulse schiebbar ist, gegen die Stützhülse unter Verformung des Rohres drückt. Mit der Verformung des Rohres kann darüber hinaus die Abdichtung des Rohres am Fittingkörper einhergehen. Dies ist aber nicht zwingend erforderlich, da die Abdichtung des Rohres, die im Regelfall über Elastomer-Dichtungselemente erfolgt, auch in einem außerhalb der Verformung liegenden Bereich des anzuschließenden Rohrendes erfolgen kann.

Das Fixierelement ist zweckmäßigerweise an einem Halteelement gehalten, die das von dem Fittingkörper aufgenommene Rohrende umgibt. Sofern der Fittingkörper mit einer Stützhülse versehen ist, sind diese und das Halteelement im Wesentlichen konzentrisch zueinander angeordnet, wobei sich das Ende des anzuschließenden Rohres zwischen beiden erstreckt. In seinem Fixierzustand stützt sich das Fixierelement nunmehr an dem Halteelement ab und greift damit zuverlässig an dem Ende des anzuschließenden Rohres zwecks Fixierung desselben an.

Bei dem Fixierelement handelt es sich zweckmäßigerweise um einen Fixierring, Dementsprechend sind der Vorsprung bzw. die Vertiefung der Stützhülse, auf die oben im Zusammenhang mit einzelnen Weiterbildungen der Erfindung eingegangen wird, ebenfalls in Umfangsrichtung der Stützhülse erstreckend ausgebildet.

In vorteilhafter Weiterbildung der Erfindung ist ferner vorgesehen, dass der Fixierring zwei Axialenden aufweist und dass der Fixierring in seinem Fixierzustand zwischen seinen beiden Axialenden eine Einschnürung und/oder an zumindest einer seiner Axialenden radial einwärts umgebogen ist. Diese Ausgestaltungen des Fixierrings sind dann von Vorteil, wenn der Fixierring an einer das Ende des anzuschließenden Rohres von außen umgebenden Haltehülse des Fixierkörpers gelagert ist. Sofern der Fixierring von innen an dem Ende des anzuschließenden Rohres angreift, kann die Formgebung des Fixierrings jeweils invers zu den beiden zuvor beschriebenen Alternativformen ausgebildet sein.

Als Farmgedächtnis-Metalllegierung kommen insbesondere ein oder mehrere der nachfolgenden genannten Legierungen in Frage: NiTi-Legierungen. NiTi-X-Legierungen (wobei X beispielsweise Nb sein kann), CuZnAl-Legierungen, CuAlNi-Legierungen, Ag-Cd, Au-Cd, Cu-Zn, Cu-Sn, In-Ti, Ni-Al, Fe-Pt, Mn-Cu, Fe-Mn-Si.

Sinngemäß ist also nach der Erfindung vorgesehen, ein an einem Fitting anzuschließendes Rohr mit Hilfe eines reversibel verformten Fixierelements zu fixieren, das durch thermische Aktivierung in seine ursprüngliche Form (Fixierzustand) zurückgeht und in diesem Zustand eine kraftschlüssige Verbindung zwischen dem Fittingkörper und dem Rohr erzeugt. Formgedächtnis-Metalllegierungen sind grundsätzlich bekannt, weshalb an dieser Stelle auf einzelne Materialzusammensetzungen der Legierungen und deren Verformung aus einer ursprünglich Position (Fixierzustand) in eine andere Form (Nicht-Fixierzustand), aus der sie sich durch thermische Aktivierung wieder zurückverformen lassen, nicht näher eingegangen zu werden braucht.

Die Erfindung wird nachfolgend anhand der Zeichnung und unter Bezugnahme auf diverse Ausführungsbeispiele näher erläutert. Im Einzelnen zeigen dabei:
- Fign. 1 und 2: jeweils Halbschnitte eines Fittings für ein Kunststoffrohr, wobei sich das Fixierelement zum einen in seiner Nicht-Fixierposition (Fig. 1) und zum anderen in seiner Fixierposition (Fig. 2) befindet,
- Fign. 3 und 4: jeweils Halbschnitte durch ein anderes Ausführungsbeispiel eines Fittings für ein Rohr, wobei sich das Fixierelement einerseits (Fig. 3) in seinem Nicht-Fixierzustand und andererseits (Fig. 4) in seinem Fixierzustand befindet,
- Fign. 5 und 6: jeweils Halbschnitte durch ein weiteres Ausführungsbeispiel eines Fittings für ein Rohr, wobei sich das Fixierelement einerseits (Fig. 5) in seinem Nicht-Fixierzustand und andererseits (Fig. 6) in seinem Fixierzustand befindet, und
- Fign. 7 und 8: jeweils Halbschnitte durch ein letztes Ausführungsbeispiel eines Fittings für ein Rohr, wobei sich das Fixierelement einerseits (Fig. 7) in seinem Nicht-Fixierzustand und andererseits (Fig. 8) in seinem Fixierzustand befindet

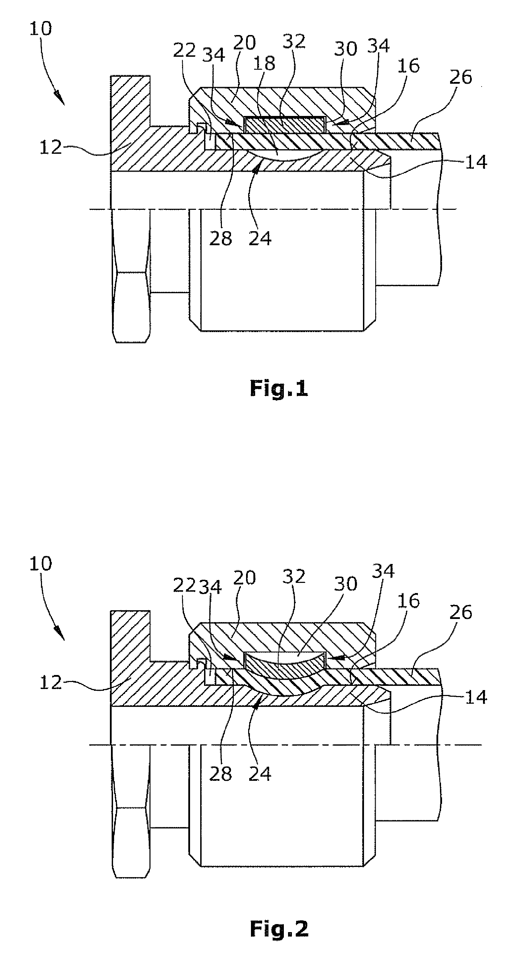

Die Fign. 1 und 2 zeigen jeweils Halbschnitte eines ersten Ausführungsbeispiels eines Fittings 10. Der Fitting 10 besteht beispielsweise aus einer Metalllegierung oder aus Kunststoff oder aus einem Kunststoff-/Metallverbundwerkstoff und weist einen Fittingkörper 12 auf, der mit einer Stützhülse 14 versehen ist. Die Stützhülse 14 ist an ihrer Außenseite 16 mit einer in Umfangsrichtung verlaufenden Vertiefung 18 versehen. Konzentrisch und mit Abstand zur Stätzhülse 14 befindet sich eine Haltehülse 20, die ebenfalls mit dem Fittingkörper 12 verbunden ist. In den Ringzwischenraum 22 zwischen Haltehülse 20 und Stützhülse 14 lässt sich das Ende 24 eines anzuschließenden Rohres 26 hineinschieben.

In diesem Ausführungsbeispiel handelt es sich bei dem Rohr 26 um ein Kunststoffrohr. Alternativ kann das Rohr aber auch aus einem Kunststoff-/Metallverbundwerkstoff bestehen.

An der Innenseite 28 der Haltehülse 20 befindet sich eine in Umfangsrichtung laufende Aufnahmevertiefung 30 für einen Fixierring 32, der in diesem Ausführungsbeispiel nach Art eines Bandrings ausgebildet ist. Der Fixierring 32 besteht aus einer Formgedächtnis-Metalllegierung. Als Legierung kommt eine der weiter oben angegebenen Materialzusammensetzungen in Frage. Die Aufnahmevertiefung 30 ist der Vertiefung 18 der Stützhülse 14 gegenüberliegend angeordnet.

In der Situation gemäß Fig. 1 befindet sich der Fixierring 32 in seinem Nicht-Fixierzustand, in dem er nicht auf das Ende 24 des anzuschließenden Rohres 26 einwirkt, dieses vielmehr also lose in den Ringzwischenraum 22 eingeschoben ist. Durch thermische Aktivierung, d.h. durch Erwärmung des Fixierrings 32 nimmt dieser seine ursprüngliche Form an, die im Wesentlichen in Fig. 2 gezeigt ist. In dieser Form, dem Fixierzustand des Fixierrings 32, ist dieser an seiner Außenseite konkav verformt, weist also zwischen seinen axialen Enden 34 eine Einschnürung auf. Aufgrund dieser Einschnürung wird nun die Wandung am vom Fitting 10 aufgenommenen Ende 24 des anzuschließenden Rohres 26 in die umlaufende Vertiefung 18 der Stützhülse 14 hineingedrückt, wodurch es zur Fixierung des Rohres 26 am Fitting 10 kommt.

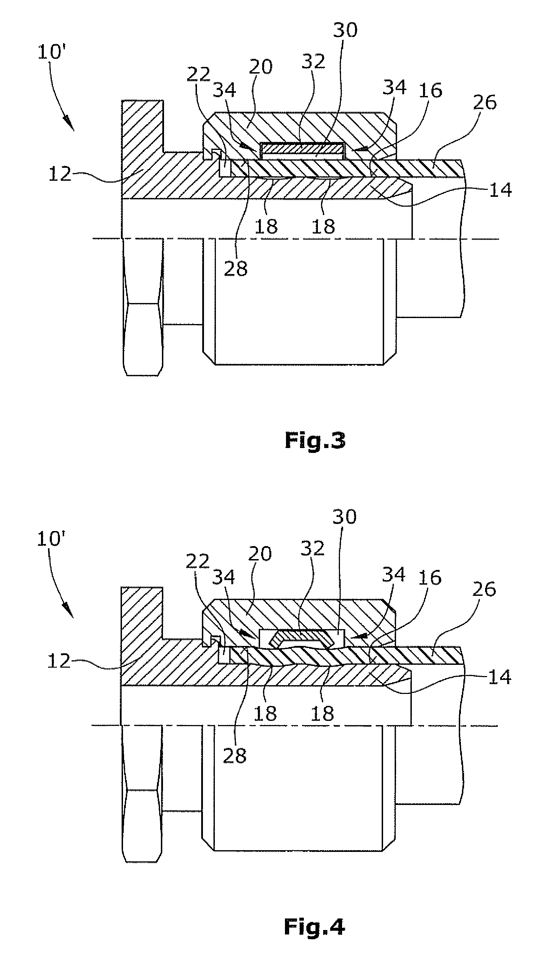

In den Fign. 3 und 4 ist ein alternativ ausgebildeter Fittingkörper 10' mit einem gemäß einem weiteren Ausführungsbeispiel der Erfindung geformten Fixierring 32 gezeigt. Soweit die einzelnen Elemente des Fittings 10' der Fign. 3 und 4 konstruktiv bzw. funktional gleich den Elementen des Fittings 10 der Fign. 1 und 2 sind, sind sie in den Fign. 3 und 4 mit den gleichen Bezugszeichen wie in den Fign. 1 und 2 bezeichnet. Der Unterschied der Fittinge gemäß den Fign. 1 und 2 bzw. 3 und 4 ist darin zu sehen, dass der Fixierring 32 des Fittings 10' an seinen Axialenden 34 im Fixierzustand einwärts gebogen ist und auf diese Weise für eine Verformung des Endes 24 des anzuschließenden Rohres 26 sorgt, das in Vertiefungen 18 der Stützhülse 14 hineingedrückt wird, wie es in Fig. 4 gezeigt ist.

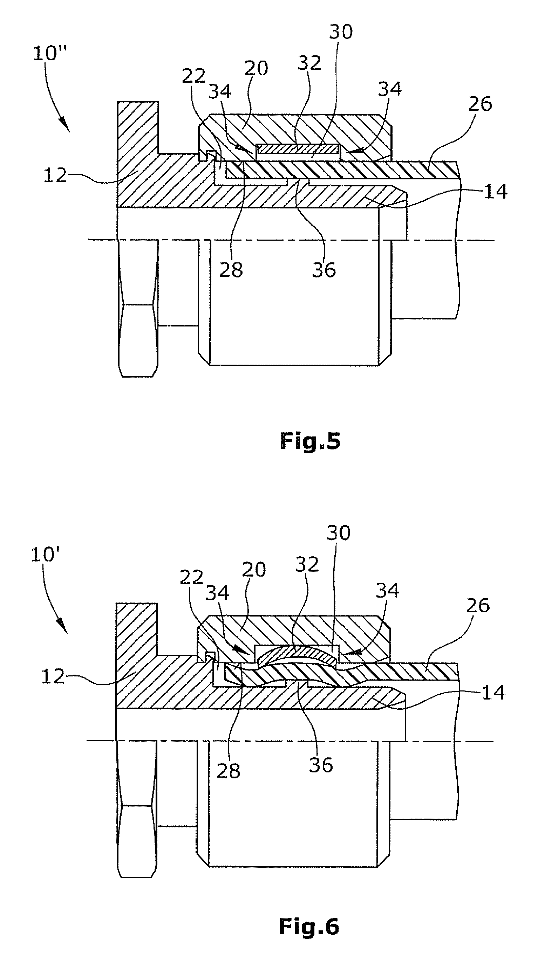

Ein weiteres Ausführungsbeispiel eines Fittings 10" mit einem Fixierelement aus einer Formgedächtnis-Metalllegierung ist in den Fign. 5 und 6 gezeigt. Auch hier gilt, dass gleiche Einzelteile mit den gleichen Bezugszeichen versehen sind.

Bei dem Ausführungsbeispiel gemäß den Fign. 5 und 6 weist die Stützhülse 14 einen Umfangsvorsprung 36 auf, um den der Fixierring 32 die Wandung des anzuschließenden Rohres 26 legt, wenn sich der Fixierring 32 in seinem Fixierzustand gemäß Fig. 6 befindet. In diesem Fixierzustand ist der Fixierring 32 an seiner Außenseite ballig, d.h. an seiner Innenseite konkav.

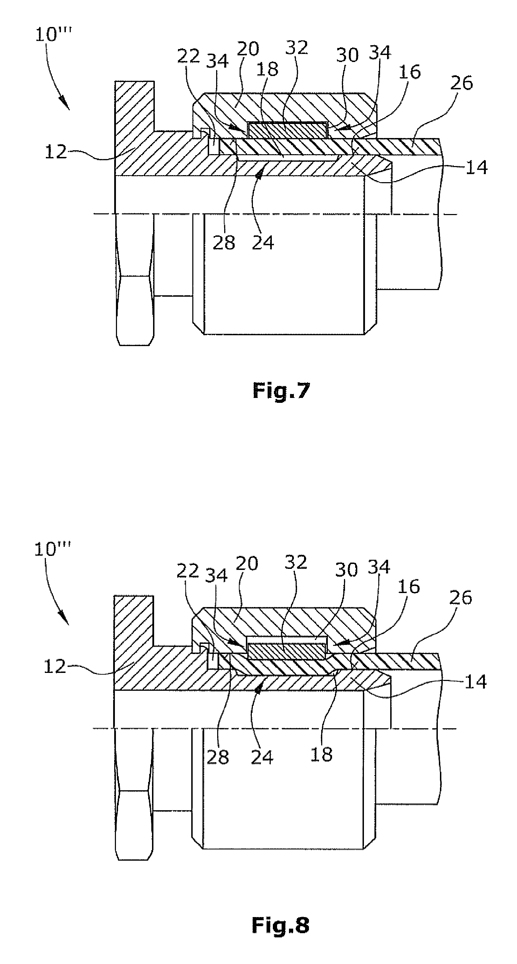

In den Fign. 7 und 8 ist ein viertes Ausführungsbeispiel eines Fittings 10'" beschrieben, bei dem sich der Fixierring 22 aus einer Formgedächtnislegierung aus seinem Nicht-Fixierzustand radial zusammenzieht, wenn er in die Fixierposition überführt wird. In diesem zusammengeschnürten Zustand presst sich der Fixierring 32 von außen radial gegen das zu haltende Rohr 26, das dadurch in eine Umfangsvertiefung der Stützhülse 14 des Fittingkörpers 12 gedrückt wird.

Die Erfindung wurde vorstehend anhand mehrerer Ausführungsbeispiele beschrieben, wobei das Fixierelement, d.h. der Fixierring 32, stets von außen an dem anzuschließenden Rohr 26 angreift. Es sei an dieser Stelle hervorgehoben, dass das Fixierelement ebenso auch an einem Teil des Fittings angeordnet sein kann, über den das anzuschließende Rohr geschoben wird, so dass der Fixierring bzw. das Fixierelement bei diesen Ausgestaltungen von Fittingen von innen an die Wandung des anzuschließenden Rohres angreift. Insbesondere kann das Fixierelement als Hülse ausgebildet sein, wie es bei mit Presswerkzeugen verpressbaren Pressfittingen der Fall ist.

## Patentansprüche

1. Fitting für ein Rohr, insbesondere ein Kunststoffrohr oder ein Kunststoff-/Metallverbundrohr, mit
- einem Fittingkörper (12) zur Aufnahme des Endes (24) eines anzuschließenden Rohres (26) und
- einem Fixierelement (32) zum Fixieren des Endes (24) des anzuschließenden Rohres (26) an dem Fittingkörper (12),
**dadurch gekennzeichnet,**
- **dass** das Fixierelement (32) eine Formgedächtnis-Metalllegierung aufweist und
- **dass** das Fixierelement (32) durch thermische Aktivierung aus einem Nicht-Fixierzustand, in dem das Ende (24) des anzuschließenden Rohres (26) ohne Fixierung von dem Fittingkörper (12) aufgenommen ist, in einen Fixierzustand verformbar ist, in dem das Ende (24) des anzuschließenden Rohres (26) an dem Fittingkörper (12) fixiert ist.

2. Fitting nach Anspruch 1, **dadurch gekennzeichnet, dass** der Fittingkörper (12) eine Stützhülse (14) aufweist, auf die das Ende (24) des anzuschließenden Rohres (26) aufschiebbar ist, und dass die Stützhülse (14) an ihrer Außenseite (16) eine Vertiefung (18) aufweist, in die das Fixierelement (32) einen die Vertiefung (18) überspannenden Bereich des Endes (24) des anzuschließenden Rohres (26) unter Verformung desselben hineindrückt.

3. Fitting nach Anspruch 1, **dadurch gekennzeichnet, dass** der Fittingkörper (12) eine Stützhülse (14) aufweist, auf die das Ende (24) des anzuschließenden Rohres (26) aufschiebbar ist, dass die Stützhülse (14) an ihrer Außenseite (16) einen Vorsprung (36) aufweist, und dass das Fixierelement (32) in seiner Fixierposition einen den Vorsprung (36) überspannenden Bereich des Endes (24) des anzuschließenden Rohres (26) zumindest auf der einem freien Ende der Stützhülse (14) abgewandten Seite des Vorsprungs (36) gegen die Stützhülse unter Verformung drückt.

4. Fitting nach einem der Ansprüche 1 bis 3, **dadurch gekennzeichnet, dass** das Fixierelement (32) an der Innenseite (28) eines Halteelements (20) gehalten ist, das das von dem Fittingkörper (12) aufgenommene Ende (24) des anzuschließenden Rohres (26) umgibt.

5. Fitting nach Anspruch 4, **dadurch gekennzeichnet, dass** sich das Fixierelement (32) in seinem Fixierzustand an dem Haltelement (20) abstützt.

6. Fitting nach einem der Ansprüche 1 bis 5, **dadurch gekennzeichnet, dass** das Fixierelement (32) ein Fixierring ist.

7. Fitting nach Anspruch 6, **dadurch gekennzeichnet, dass** der Fixierring (32) zwei Axialenden (34) aufweist und dass der Fixierring (32) in seinem Fixierzustand zwischen seinen beiden Axialenden (34) eine Einschnürung aufweist.

8. Fitting nach einem der Ansprüche 1 bis 6, **dadurch gekennzeichnet, dass** der Fixierring (32) zwei Axialenden (34) aufweist und dass der Fixierring (32) in seinem Fixierzustand an mindestens einem seiner Axialenden (34) radial einwärts umgebogen ist.

9. Fitting nach einem der Ansprüche 1 bis 8, **dadurch gekennzeichnet, dass** das Fixierelement (32) nach Art einer Hülse zum Umgeben eines auf eine Stützhülse (14) des Fittingkörpers (12) geschobenen Endes (24) des anzuschließenden Rohres (26) ausgebildet ist.

10. Fitting nach einem der Ansprüche 1 bis 9, **dadurch gekennzeichnet, dass** die Formgedächtnis-Metalllegierung aus der Gruppe der nachfolgend aufgeführten Metalllegierungen ausgewählt ist: NiTi-Legierungen, NiTi-X-Legierungen (wobei X beispielsweise Nb sein kann), CuZnAl-Legierungen, CuAlNi-Legierungen, Ag-Cd, Au-Cd, Cu-Zn, Cu-Sn, In-Ti, Ni-Al, Fe-Pt, Mn-Cu,Fe-Mn-Si.
